# EUROPEAN PATENT APPLICATION

(11) **EP 1 432 272 A1**
(43) Date of publication of application: **23.06.2004**
(21) Application number: 02799500.0
(22) Date of filing: 25.09.2002
(51) Int. Cl.: H04Q 9/00

(54) **CONTROLLABLE DEVICE AND CONTROLLABLE METHOD**

(30) Priority: 26.09.2001 JP 2001293798; 28.11.2001 JP 2001363202
(71) Applicant: MATSUSHITA ELECTRIC INDUSTRIAL CO., LTD., Kadoma-shi, Osaka 571-8501 (JP)
(72) Inventor: ICHIKAWA, Kei, Ibaraki-shi, Osaka 567-0885 (JP); ISOE, Satoshi, Higashiosaka-shi, Osaka 577-0803 (JP); OHNISHI, Yasuhito, Sanda-shi, Hyogo 669-1547 (JP); MAEDA, Keigo, Kyoto-shi, Kyoto 606-0816 (JP); KUNIHIRA, Tadashi, Sakai-shi, Osaka 591-8031 (JP)
(74) Representative: Grünecker, Kinkeldey, Stockmair & Schwanhäusser Anwaltssozietät
(86) International application number: PCT/JP2002/009896
(87) International publication number: WO 2003/028402

(57) **Abstract**

The invention is directed to a control system which controls an apparatus using a network such as an IEEE 1394 high-speed serial bus, and aims at making it possible for an old control apparatus to control a new controlled apparatus even when the new controlled apparatus is connected to the old control apparatus which does not support control of the new controlled apparatus.

An HDR 4 is controlled by a first DTV 1 and a second DTV 2 via an IEEE serial bus 5, an HDR 45 performs a predetermined operation, a main subunit 40 activates the HDR 45 in response to an instruction which is from one or a plurality of the first DTV 1 and the second DTV 2 and directed to the HDR 4, and an auxiliary subunit 42 disguises as if it were an apparatus other than the HDR 4 and directly or indirectly activates the HDR 4 in response to an instruction which is from the first DTV 1, the second DTV 2 and is directed to an apparatus other than the HDR 4.

## Description

### FIELD OF THE INVENTION

The present invention relates to a control system for controlling apparatuses on a network such as an IEEE 1394 high-speed serial bus (hereinafter referred to as a "1394 serial bus") for instance, and to an apparatus or the like which permits an old control apparatus to control a new controlled apparatus even when the new controlled apparatus is connected to the old control apparatus which does not support control for the new controlled apparatus.

### BACKGROUND ART

The recent years have seen an emerging environment in which mutually connected AV apparatuses exchange an AV data signal, a control signal (command) and the like with each other on an AV network which is built using an IEEE 1394 network (hereinafter referred to as a "1394 network") technology to thereby record and reproduce the AV data signal. The description on technologies related to the IEEE 1394 is based on the documents below which shall be referred to appropriately:
[1] IEEE Std 1394-1995, Standard for a High Performance Serial Bus
[2] IEC61883, Consumer audio/video equipment-Digital Interface
[3] 1394 Trade Association document number 1998003, AV/C Digital Interface Command Set General Specification, version3.0
[4] 1394 Trade Association document number 1998012, AV/C Tape Recorder/Player Subunit Specification, version2.1
[5] 1394 Trade Association document number 1998013, AV/C Disc Subunit General Specification
[6] 1394 Trade Association document number 1999029, AV/C Disc Subunit Enhancements for Hard Disk Drive Specification
[7] 1394 Trade Association document number 1999030, AV/C Disc Subunit-Hard Disk Drive Device Type Specification 1.0

One example of such a network is that a digital television set (hereinafter referred to as a "DTV") and a digital videocassette recorder (hereinafter referred to as a "DVCR") are connected via a 1394 serial bus and the DTV controls the DVCR. The DTV serving as a control apparatus is a controller, and is equipped with an application which is only for controlling the target, i.e., the DVCR which serves as a controlled apparatus. Meanwhile, the DVCR is equipped with a command which allows the DVCR to be controlled (a control command of a TAPE RECORDINGER/PLAYER subunit).

A command is transmitted between the DTV and the DVCR through an asynchronous communication on the 1394 serial bus. The application installed in the DTV is capable of inquiring the subunit type of a subunit which forms an apparatus connected on the 1394 serial bus and accordingly identifying what kind of apparatus the connected apparatus is (i.e., what kind of command is installed in the apparatus). When the subunit type is TAPE RECORDINGER/PLAYER which expresses a DVCR, the DTV's application sends a record, reproduction or otherwise appropriate command to the DVCR, thereby controlling the DVCR which is connected via the 1394 serial bus.

In this instance, used as the command is the control command of the TAPE RECORDINGER/PLAYER subunit among an AV/C command set determined by the 1394 Trade Association.

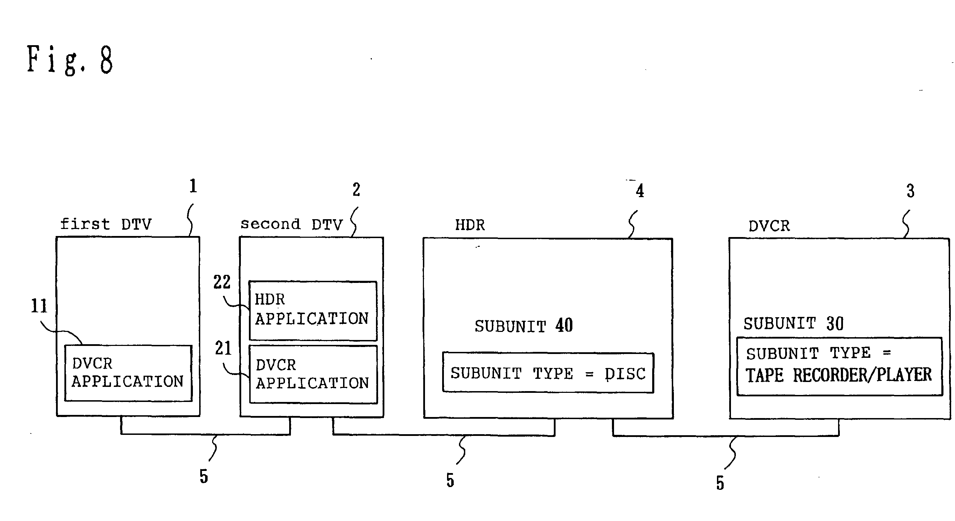

An example that the first DTV 1 described above, a second DTV 2, a DVCR 3 and a hard disk recorder 4 (hereinafter referred to as an "HDR") are connected on a 1394 serial bus 5 will now be described with reference to Fig. 8. The first DTV 1 is equipped with a DVCR application 11 which is for controlling a TAPE RECORDINGER/PLAYER subunit in a similar manner to that above. The second DTV 2 is equipped with a DVCR application 21 which is for controlling a TAPE RECORDINGER/PLAYER subunit and a DISC application 22 which is for controlling a DISC (HDD) subunit. Sending the DVCR 3 a command for inquiring a structure of a subunit, the first DTV 1 checks the structure of the subunit. Since the DVCR 3 is formed by one subunit 30 and the subunit type of this is TAPE RECORDINGER/PLAYER, the first DTV 1 consequently controls the DVCR 3 by means of the DVCR application 11.

As for the HDR 4 as well, the first DTV 1 inquires a structure of a subunit of the HDR 4 in a similar manner to that for inquiring regarding the DVCR 3, whereby it is found that the subunit type of a subunit 40 is DISC (HDD) . Since the HDR 4 is not formed by a TAPE RECORDINGER/PLAYER subunit which the DVCR application 11 of the first DTV 1 can control, the first DTV 1 cannot control the HDR 4.

In a similar fashion, equipped with the DVCR application 21 which is for controlling a TAPE RECORDINGER/PLAYER subunit and the DISC application 22 which is for controlling a DISC (HDD) subunit, the second DTV 2 can control the DVCR 3 and the HDR 4.

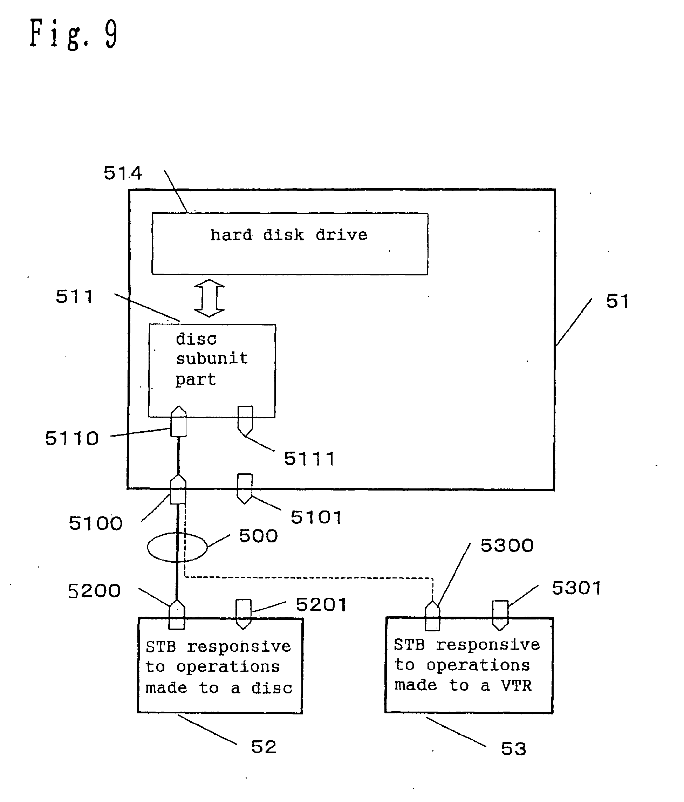

As other example of the 1394 network described above, Fig. 9 shows a structure diagram of an AV network-compatible recording and reproducing apparatus which is for recording and reproducing an AV data signal (Refer to Japanese Patent Application Laid-Open Gazette No. 2000-278770 for instance.). In Fig. 9, denoted at 51 is an AV network-compatible recording and reproducing apparatus which is a central part of the illustrated structure. To be specific, the assumption here is that the example is an HDD recorder which uses a hard disk drive as a recording medium. Denoted at 52 and 53 are apparatuses which play a role as a controller for an HDD recorder 1 which is connected via a 1394 network 500. To be specific, they are assumed to be STBs (Set Top Box).

The STB 52 is equipped with an application which permits to control a recording and reproducing apparatus such as an HDD recorder which uses a disk medium, while the STB 53 is equipped with an application which permits to control a recording and reproducing apparatus which uses a tape medium of the D-VHS type, etc. In general, the STB 53 is a legacy apparatus, i.e., an apparatus fabricated in accordance with the past standard and not compatible with the current standards. The past standard in this context refers to that described in the document [4] and the current standards refer to those described in the documents [5] through [7]. While the STB 52 and the STB 53 each comprise one input/output terminal in reality, on the network 500, an output terminal 5200 and an input terminal 5201 are logically set to the STB 52 and an output terminal 5300 and an input terminal 5301 are logically set to the STB 53.

Further, while the HDD recorder 1 comprises one input/output terminal in reality, terminals 5100 and 5101 for inputting and outputting the AV data signal via the 1394 network are logically set to the HDD recorder 1. Denoted at 5100 is an input terminal and denoted at 5101 is an output terminal. Denoted at 511 is a disc subunit part which accepts a disc-operation-reflecting record/reproduce command from the AV network. While the disc subunit part 511 comprises one input/output terminal for inputting and outputting the AV data signal in reality, on the network 500, an input terminal 5110 and an output terminal 5111 are logically set to the disc subunit part 511. Denoted at 514 is a hard disk drive which actually records and reproduces the AV data signal.

A description will now be given on logical procedures on the network 500 during an operation in which the STB 52 remotely operates an HDD recorder 51 via the 1394 network 500 and the AV data signal outputted from the STB 52 is recorded in the HDD recorder 1 in such a structure.

At first, the STB 52 checks the inside of the HDD recorder 51 via the network 500. Since the network 500 can recognize the disc subunit part 511, the STB 52 learns that there is a subunit (the disc subunit part 511) which accepts a disc-operation-reflecting command and accordingly determines that it is possible to record.

The STB 52 then establishes an isochronous connection between the output terminal 5200 of the STB 52 and the apparatus input terminal 5100 of the HDD recorder, thereby building a transmission path for the signal. Further, the STB 52 issues a 1394 interconnect command to the HDD recorder 1 via the network, thereby establishing an interconnection between the apparatus input terminal 5100 of the HDD recorder 51 and the input terminal 5110 for the disc subunit part. This builds a transmission path for the signal between the STB 52 and the disc subunit part 511.

The STB 52 thereafter issues a disc-operation-reflecting record command to the disc subunit part 511 of the HDD recorder 1, via the network 500. The disc subunit part 511, receiving the record command, drives the hard disk drive 514 so that the inputted AV data signal is recorded on the hard disk. At this stage, an instruction from the STB 52 to the HDD recorder 51 contains a designation regarding recording/reproducing states of the input terminal 5110 and the output terminal 5111. The HDD recorder 51 can be accessed at random, which is for the purpose of realizing the so-called simultaneous recording/reproduction operation during which while a certain AV data signal is recorded, another AV data signal on the hard disk drive 514 is reproduced.

In contrast, an instruction issued to a recording and reproducing apparatus such as a VTR in accordance with the application of the STB 53 which responds to operations made to the VTR does not contain a designation regarding states of an input terminal and an output terminal of the recording and reproducing apparatus which is connected to the STB 51.

By the way, although the first DTV 1 can control the DVCR 3 since the first DTV 1 serving as a controller shown in Fig. 8 is equipped with the application which is for controlling the DVCR 3 using a command of TAPE RECORDINGER/PLAYER subunit which is a TAPE RECORDINGER/PLAYERsubunit, the first DTV 1 cannot control the HDR 4 since the first DTV 1 is not equipped with an application for controlling the HDR 4, which works in response to the DISC (HDD) command of the DISC (HDD) subunit. Hence, a user who uses the first DTV 1 cannot control the HDR 4 even when the HDR 4 is connected to the first DTV 1 via the 1394 serial bus.

In addition, when one wishes to make a conventional AV network-compatible recording and reproducing apparatus as that described above execute a recording/reproduction operation from the STB 53 on the 1394 network, the STB 53 is a legacy apparatus and as described earlier is equipped only with an application which issues a command which is for controlling a recording and reproducing apparatus which uses a tape medium of the D-VHS type, etc.

As the STB 53 checks the inside of the HDD recorder 1 via the network 500, the network can recognize the disc subunit part 511. However, even though there is a VTR-operation-reflecting record/reproduce command sent from the STB 53, the disc subunit part 511 cannot accept the command, and hence, the STB 53, determining that there is no subunit on the network 500 which accepts a VTR-operation-reflecting command issued from the STB 53, stops executing subsequent operations. It therefore is impossible to record with the HDD recorder 51 via the network from the STB 53.

A basic operation remains the same both for recording of AV data on a tape medium and for recording on a disk medium. In terms of ease of use, it is very inconvenient for a user that it is not possible to make a recording and reproducing apparatus comprising a disk-type recording medium execute a basic recording/reproduction operation from a legacy apparatus.

### DISCLOSURE OF THE INVENTION

The present invention has been made in light of the problems described above, and accordingly, aims at providing a controlled apparatus or the like which is capable of accepting and operating in accordance with a command even from a control apparatus such as a legacy apparatus which is not equipped with a compatible application.

To achieve the above object, a first invention of the present invention is a controlled apparatus which is controlled by one or a plurality of control apparatuses via a network, comprising:
an apparatus main part which performs a predetermined operation;
a main subunit which activates said apparatus main part in response to an instruction which is from said one or plurality of control apparatuses and directed to said controlled apparatus; and
an auxiliary subunit which disguises as if it were an apparatus other than said controlled apparatus and which directly or indirectly activates said apparatus main part in response to an instruction which is from said one or plurality of control apparatuses and directed to an apparatus other than said controlled apparatus.

A second invention of the present invention is the controlled apparatus of the first invention, comprising subunit allocating means which allocates the type and/or the number of said auxiliary subunit.

A third invention of the present invention is the controlled apparatus of the first invention of the present invention, comprising notifying means which notifies said control apparatus that both said main subunit and said auxiliary subunit are capable of activating said apparatus main part.

A fourth invention of the present invention is the controlled apparatus of the first invention of the present invention, comprising setting means which sets regarding (1) whether said controlled apparatus can be activated by said main subunit, (2) whether said controlled apparatus can be activated by said auxiliary subunit and (3) whether said controlled apparatus can be activated as said main subunit and said auxiliary subunit.

A fifth invention of the present invention is the controlled apparatus of the first invention of the present invention, wherein said apparatus main part has a recording/reproduction function which is for recording and/or reproducing data,

said main subunit is logically set at least one input plug which can detect an inputting state of said data to said apparatus main part and/or at least one output plug which can detect an outputting state of said data from said apparatus main part, and
said instruction to said main subunit contains information which designates each one of said inputting state of said input plug and said outputting state of said output plug.

A sixth invention of the present invention is the controlled apparatus of the fifth invention of the present invention, wherein said input plug and said output plug are set one each to said main subunit,
an operating state of said controlled apparatus responding to a control apparatus which issues an instruction to said main subunit during an operation of said auxiliary subunit is expressed as a combination of said inputting state of said input plug and said outputting state of said output plug of said main subunit, and
an operating state of said controlled apparatus responding to a control apparatus which issues an instruction to said auxiliary subunit during an operation of said main subunit is expressed as an operating state of said auxiliary subunit which is determined based on a combination of said inputting state of said input plug and said outputting state of said output plug of said main subunit.

A seventh invention of the present invention is the controlled apparatus of the sixth invention of the present invention, wherein when either one of said inputting state of said input plug and said outputting state of said output plug is indicative of stopped inputting of data in or stopped outputting of data from said main subunit, an operating state of said controlled apparatus responding to a control apparatus which issues an instruction to said auxiliary subunit during an operation of said main subunit is expressed as the other one of said inputting state of said input plug and said outputting state of said output plug.

An eighth invention of the present invention is the controlled apparatus of the seventh invention of the present invention, wherein when a stop instruction to stop reproduction of said data is received by said auxiliary subunit as said instruction during data reproduction performed by said apparatus main part, said outputting state of said output plug of said main subunit becomes a stopped state, and
when a stop instruction to stop recording of said data is received by said auxiliary subunit as said instruction during data recording performed by said apparatus main part, said inputting state of said input plug of said main subunit becomes a stopped state.

A ninth invention of the present invention is the controlled apparatus of the seventh invention of the present invention, wherein when either one of said inputting state of said input plug and said outputting state of said output plug of said main subunit is indicative of recording or reproduction of said data, an operating state of said controlled apparatus responding to a control apparatus which issues an instruction to said auxiliary subunit during an operation of said main subunit is expressed by the other one of said inputting state of said input plug and said outputting state of said output plug,
when said inputting state of said input plug is indicative of recording of said data and said outputting state of said output plug is indicative of reproduction of said data and when said input plug is recognized as being connected to said network, said operating state is determined as recording, but
when said input plug is recognized as not being connected to said network, said operating state is determined as reproduction.

A tenth invention of the present invention is the controlled apparatus of any one of the first through the ninth inventions of the present invention, wherein said network is in compliance with the IEEE 1394 standard.

An eleventh invention of the present invention is the controlled apparatus of any one of the first through the ninth inventions of the present invention, wherein said control apparatus recognizes said main subunit as an apparatus related to recording in and/or reproduction from a random-access recording medium but said auxiliary subunit as an apparatus related to recording in or reproduction from a tape medium.

A twelfth invention of the present invention is a method-for-being-controlled for being controlled by one or a plurality of control apparatuses via a network, comprising:
a first step of accepting an instruction which is from said one or plurality of control apparatuses and directed to said controlled apparatus and activating an apparatus main part which performs a predetermined operation; and
a second step of disguising as an apparatus other than said controlled apparatus and directly or indirectly activating said apparatus main part in response to an instruction which is from said one or plurality of control apparatuses and which is directed to an apparatus other than said controlled apparatus.

A thirteenth invention of the present invention is the method-for-being-controlled of the twelfth invention of the present invention, wherein said apparatus main part has a recording/reproduction function which is for recording and/or reproducing data,
said first step comprises a step of logically setting at least one input plug which can detect an inputting state of said data to said apparatus main part and/or at least one output plug which can detect an outputting state of said data from said apparatus main part, and
said instruction at said first step contains information which designates each one of said inputting state of said input plug and said outputting state of said output plug.

A fourteenth invention of the present invention is the method-for-being-controlled of the thirteenth invention of the present invention, wherein said first step comprises a step of setting said input plug and said output plug one each,
a state of implementation of said method-for-being-controlled on a control apparatus which issues an instruction which is for said first step is expressed as a combination of said inputting state of said input plug and said outputting state of said output plug at said first step, and
a state of implementation of said method-for-being-controlled on a control apparatus which issues an instruction which is for said second step during execution of said first step is expressed as an execution state of said second step which is determined based on a combination of said inputting state of said input plug and said outputting state of said output plug at said first step.

According to the present invention described above, with this subunit for example made compatible with a plurality of subunits, a controlled apparatus is realized which can be controlled even from not only a controller which is compatible with an originally intended subunit type but also an controller which is compatible with an allocated subunit type.

Further, the controller can see that an originally intended subunit operates as a plurality of different. subunits.

Further, since it is possible to set up an operation mode of the controlled apparatus, when one wishes to use the controlled apparatus as it is connected only with a controller which is compatible with the originally intended subunit for example, with the controlled apparatus set to a mode for operating as the originally intended subunit, the connection compatibility is enhanced.

Further, when the controlled apparatus is made responsive to a plurality of control commands which are based on the compatible subunit type, it is possible to control the controlled apparatus from a plurality of control apparatuses which comprise the control commands.

Further, a control system is provided in which a control apparatus distinguishes the originally intended subunit from among subunits to which a plurality of subunit types are allocated, and controls as the originally intended subunit.

### BRIEF DESCRIPTION OF THE DRAWINGS

Fig. 1 is a block diagram which shows a structure of a control system according to an embodiment 1 of the present invention;
Fig. 2 is a drawing which shows operations of subunit allocating means and a TAPE RECORDINGER/PLAYER subunit 42 according to the embodiment 1 of the present invention;
Fig. 3 is a drawing which shows one example of a subunit type setting command according to the embodiment 1 of the present invention;
Fig. 4 is a block structure diagram of an AV network-compatible recording and reproducing apparatus of the present invention;
Fig. 5 is a block structure diagram of the AV network-compatible recording and reproducing apparatus of the present invention;
Fig. 6 is a block structure diagram of the AV network-compatible recording and reproducing apparatus of the present invention;
Fig. 7 is a relationships table which shows a recording/reproducing state each in an input terminal and an output terminal of a disc subunit part and a recording/reproducing state of a VTR subunit part;
Fig. 8 is a block diagram which shows a structure of a conventional control system; and
Fig. 9 is a block structure diagram of a conventional AV network-compatible recording and reproducing apparatus.

### (Explanation of the Reference Symbols)

- 1: first DTV
- 2: second DTV
- 3: DVCR
- 4: HDR
- 5: 1394 serial bus
- 30, 40, 42: subunit
- 41: subunit allocating means
- 43: notifying means
- 44: setting switch
- 101: AV network-compatible recording and reproducing apparatus (HDD recorder)
- 102: disc-operation-reflecting STB made to a disc
- 103: STB responsive to operations made to a VTR
- 111: disc subunit part
- 112: VTR subunit part
- 113: tuner subunit part
- 114: hard disk drive
- 1100: apparatus input terminal
- 1101: apparatus output terminal
- 1110: disc subunit part input terminal
- 1111: disc subunit part output terminal
- 1120: VTR subunit part input terminal
- 1121: VTR subunit part output terminal
- 1130: tuner subunit part output terminal
- 1200: disc-operation-reflecting STB output terminal
- 1201: disc-operation-reflecting STB input terminal
- 1300: VTR-operation-reflecting STB output terminal
- 1301: VTR-operation-reflecting STB input terminal

### BEST MODE FOR IMPLEMENTING THE INVENTION

Embodiments of the present invention will now be described in detail with reference to the associated drawings.

### (Embodiment 1)

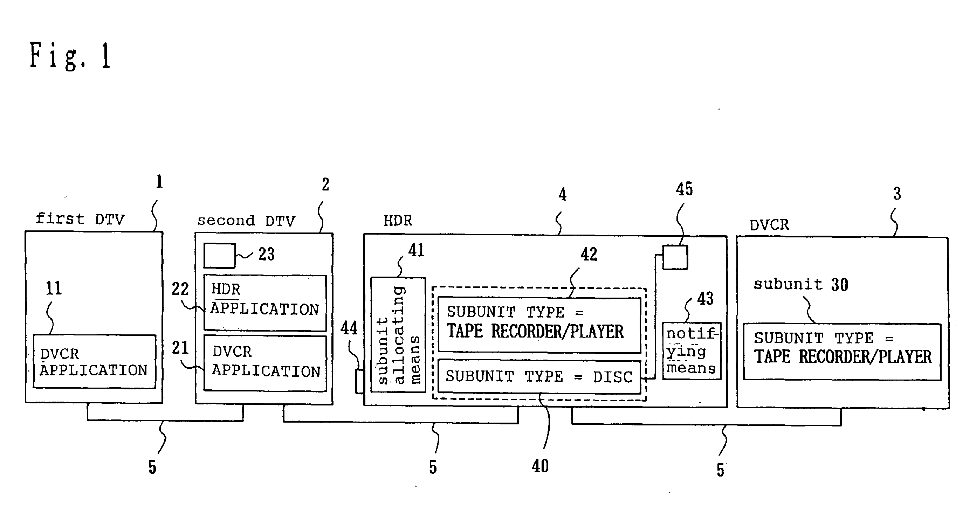

Fig. 1 shows a structure of a control system according to the embodiment 1 of the present invention. In Fig. 1, denoted at 1 and 2 are a first DTV and a second DTV. Denoted at 11 is a DVCR application. If an apparatus connected via a 1394 serial bus 5 is a DVCR, the apparatus can be controlled in accordance with the DVCR application 11. In a similar manner, denoted at 21 is a DCVR application and denoted at 22 is a DISC (HDD) application.

Denoted at 3 is a DVCR, the subunit type of a subunit 30 is TAPE RECORDINGER/PLAYER, and the DVCR is connected to the second DTV 2 by the 1394 serial bus 5. Denoted at 4 is an HDR which comprises an HDR main part 45 which is activated by subunits 40 and 42 which will be described later. While the subunit 40 is originally one DISC (HDD) subunit, in addition to the subunit 40, subunit allocating means 41 allocates the subunit 42, too, which is compatible with the TAPE RECORDINGER/PLAYER subunit type which is different from the originally intended subunit.

Hence, although the HDR 4 is formed by one subunit in reality, the subunit allocating means 41 responds to an inquiry regarding the subunit structure from the first DTV 1 and the second DTV 2 which are control apparatuses, as if the HDR 4 were formed by two subunits which are the DISC (HDD) subunit 40 and a TAPE RECORDINGER/PLAYER subunit. The recognition on the part of the first DTV 1 and the second DTV 2 is therefore that the HDR 4 is formed by two subunits, one being the subunit 40 of the DISC type and the other be.ing the subunit 42 of the TAPE RECORDINGER/PLAYER type.

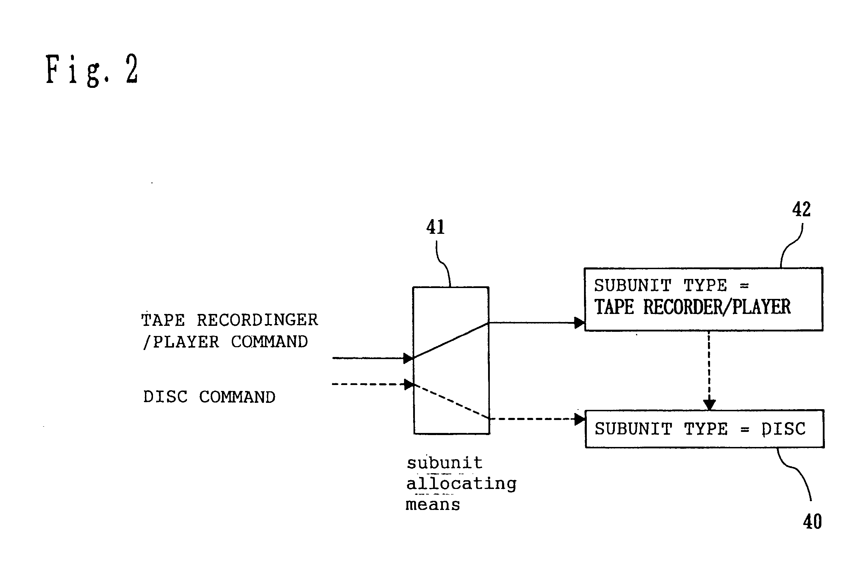

Operations of the subunit allocating means 41 and the TAPE RECORDINGER/PLAYER subunit 42 will now be described with reference to Fig. 2.

The subunit allocating means 41 judges whether a control command sent via the 1394 serial bus 5 is directed to the DISC subunit 40 or the TAPE RECORDINGER/PLAYER subunit 42, and transfers the control command to each subunit. The subunit allocating means 41 makes a judgment regarding which subunit a control command is directed to, based on information which is contained in a header of the control command and indicates a destination subunit. In the event that the TAPE RECORDINGER/PLAYER subunit 42 is not allocated to the subunit 40, by the subunit allocating means 41 a command directed to the TAPE RECORDINGER/PLAYER subunit will not be accepted.

When a received command is a DISC command, the subunit allocating means 41 sends the control command to the DISC subunit 40 which will then perform originally intended control and activate the HDR main part 45.

When a received control command is a TAPE RECORDINGER/PLAYER command, the subunit allocating means 41 sends the control command to the TAPE RECORDINGER/PLAYER subunit 42, the TAPE RECORDINGER/PLAYER subunit converts the command into a DISC control command and sends the same to the DISC subunit 40. In accordance with thus received control command, the DISC subunit 40 performs originally intended control and activates the HDR main part 45.

One example of the operation is as follows. When a normal (overwrite) RECORD command is received which is directed to the TAPE RECORDINGER/PLAYER subunit 42, the subunit allocating means 41 transfers the command to the TAPE RECORDINGER/PLAYER subunit 42. The TAPE RECORDINGER/PLAYER subunit 42 converts thus received RECORD command into a RECORD command which is a DISC command. For the purpose of converting a TAPE command into a DISC command, the TAPE RECORDINGER/PLAYER subunit 42 adds information regarding a record mode which is for setting an input plug, an object position, recording on a new track and the like, and sends the RECORD command as a DISC command to the DISC subunit 40.

The DISC subunit 40 performs normal control in accordance with the RECORD command which is a DISC command thus received from the TAPE RECORDINGER/PLAYER subunit 42.

While it has been just described that the TAPE RECORDINGER/PLAYER subunit 42 converts a received control command into a DISC command and sends it to the DISC subunit 40 so that the DISC subunit 40 controls the HDR main part 45, that is, the HDR main part 45 is indirectly controlled, instead of having the TAPE RECORDINGER/PLAYER subunit 42 converting the command into a DISC command and sending it to the DISC subunit 40 to thereby indirectly control the HDR main part 45, the command may be converted directly into an ID command which is for controlling the HDR main part 45 to thereby directly control the HDR main part 45.

Denoted at 43 is notifying means which notifies a control apparatus connected to the IEEE 1394 serial bus 5 of a fact that the HDR 4 is compatible with a plurality of subunit types. The notifying means 43 comprises a setting switch 44 which is for setting the subunit type of the subunit 40 to DISC (HDD) , TAPE RECORDINGER/PLAYER or the both. The HDR 4 is connected to the first DTV 1 and the second DTV 2 by the 1394 serial bus 5.

Operations of the first DTV 1, the second DTV 2, the DVCR 3 and the HDR 4 will now be described.

Using a command, the first DTV 1 checks subunits installed in the DVCR 3 and the HDR 4 connected via the 1394 serial bus 5. At this stage, since the subunit type of the subunit 30 of the DVCR 3 is only TAPE RECORDINGER/PLAYER, the first DTV 1 recognizes the DVCR 3 as TAPE RECORDINGER/PLAYER. The first DTV 1 can therefore control the DVCR 3 in accordance with the DVCR application 11. This operation is the same as that in the conventional example. The second DTV 2, too, can control the DVCR 3 in accordance with the DVCR application 21 as the first DTV 1 can.

As for the subunit of the HDR 4, in addition to being the DISC (HDD) subunit 40, the HDR 4 disguises as if it were the TAPE RECORDINGER/PLAYER subunit 42 which is allocated by the subunit allocating means 41 and the HDR 4 is thus compatible with two subunits. In short, when there is an inquiry with a command regarding the subunit structure of the HDR 4, although the HDR 4 is formed by one subunit in truth, since the HDR 4 is compatible with two subunit types of DISC (HDD) and TAPE RECORDINGER/PLAYER, the first DTV 1 and the second DTV 2 which are control apparatuses recognize as if the HDR 4 were formed by two subunits of DISC (HDD) and TAPE RECORDINGER/PLAYER.

Hence, the first DTV 1 and the second DTV 2 can control the HDR 4 as the TAPE RECORDINGER/PLAYER subunit 42, and further, the second DTV 2 can control the HDR 4 as the DISC (HDD) subunit 40.

In other words, with the two subunit types allocated to the HDR 4 and control commands implemented under which these are controlled, even the first DTV 1 which has heretofore been capable of controlling only a DVCR is made capable of controlling the HDR 4 as a TAPE RECORDINGER/PLAYER subunit.

Since the HDR 4 is DISC (HDD), it is desirable that the HDR 4 is controlled as a DISC (HDD) unit. While the second DTV 2 can control any one of a TAPE RECORDINGER/PLAYER subunit and a DISC (HDD) subunit, it is preferable that the second DTV 2 controls as a DISC (HDD) subunit.

To this end, the HDR 4 comprises the notifying means 43 which notifies a control apparatus of a fact that only one subunit is compatible with a plurality of subunits. The second DTV 2 which is a control apparatus can learn, owing to receiving means 23, about information issued from the notifying means 43 which is indicative of the fact that the HDR 4 is compatible with the plurality of subunits. The second DTV 2 accordingly recognizes the HDR 4 as the DISC (HDD) subunit 40 as it is supposed to do so and control in accordance with the HDR application 22.

At this stage, the second DTV 2 may automatically switch to an application corresponding to the originally intended subunit based on the information obtained through the receiving means 23, or alternatively, the receiving means 23 may merely display the information alone so that a user switches to the application which corresponds to the desired subunit.

In addition, although it appears that the second DTV 2 can control the two subunits of TAPE RECORDINGER/PLAYER and DISC (HDD) at the same time using since the HDR 4 is formed by these two units using the DVCR application 21 and the DISC application 22, the second DTV 2 cannot control the two subunits simultaneously since the DISC subunit 40 is the only one subunit in reality which controls the HDR main part 5. Hence, the second DTV 2 recognizes from the notification given from the notifying means 43 that the one unit is compatible with a plurality of subunits, i.e., that only one of the plurality of subunits can be controlled in reality, recognizes the HDR 4 as one controllable and desirable subunit, and controls the same using the corresponding application.

As described above, the subunit allocating means 41 adds the HDR 4 to the subunit 40 of the DISC (HDD) subunit type and makes the HDR 4 corresponding to both this and the subunit 42 of the TAPE RECORDINGER/PLAYER subunit type, whereby the first DTV 1, too, which is equipped only with the DVCR control application can control the HDR 4 as the TAPE RECORDINGER/PLAYER application and the second DTV 2 can control the HDR 4 as the DISC (HDD) application.

In Fig. 1, the HDR 4 is controlled as TAPE RECORDINGER/PLAYER from the first DTV 1 but as DISC (HDD) from the second DTV 2. That is, the HDR 4 accepts a command which controls the two subunits of the DISC (HDD) subunit 40 which is originally intended for the HDR 4 and the TAPE RECORDINGER/PLAYER subunit 42, and the HDR 4 operates. The second DTV 2 can control the HDR 4 also as a TAPE RECORDINGER/PLAYER subunit, in which case the HDR 4 is controlled from the two controllers as a TAPE RECORDINGER/PLAYER subunit.

The notifying means 43 may notify the first DTV 1 and the second DTV 2 from the HDR 4, or may accept an inquiry directed to the HDR 4 from the first DTV 1 and the second DTV 2. In this instance, the first DTV 1 and the second DTV 2 may have a structure which comprises communication means for making inquiries.

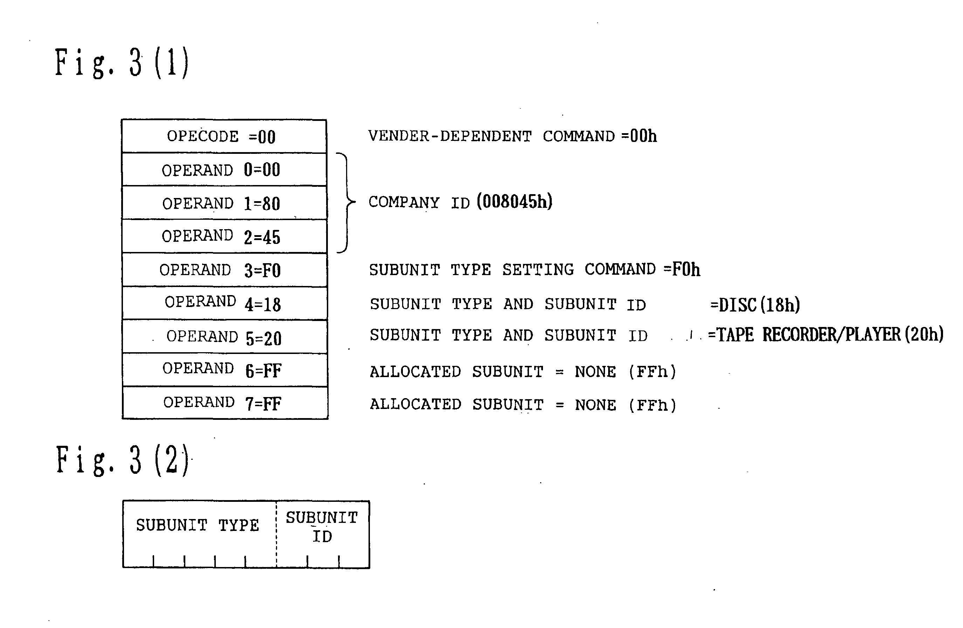

A notification or inquiry at this stage may be made using a command. Fig. 3 shows one example of the command. Fig. 3(1) is a data structure view of a notification or inquiry command, in which the name of a vender (company ID) (008045h) is expressed by the operands 0 through 2, the fact that the command is a subunit type notification command (F0h) is expressed by the operand 3, a plurality of subunit types which are allocated are expressed by the operands 4 through 7, the originally intended subunit type is expressed by the operand 4, and the subunit types which are not originally intended are expressed by the operands 5 through 7.

In this example, since the originally intended subunit type is DISC, 18h which is indicative of the DISC subunit 40 is set in the operand 4, and the TAPE RECORDINGER/PLAYER subunit type (20h) which is not the originally intended subunit type is set in the operand 5. Since there is not any other set subunit except for the TAPE RECORDINGER/PLAYER subunit 42, FFh which means that no set subunit is set in the operands 6 to 7. As shown in Fig. 3(2), five bits and three bits are allocated to the subunit type and the subunit ID, respectively.

As described above, although the HDR 4 can operate as subunits of the DISC (HDD) subunit type and the TAPE RECORDINGER/PLAYER subunit type, when the first DTV 1 which is a controller is compatible with the DISC (HDD) application, it is not necessary for the HDR 4 to operate as a TAPE RECORDINGER/PLAYER subunit and the HDR 4 only needs to operate solely as a DISC (HDD) subunit. The setting switch 44 is for fixing an operating subunit, in which case using the setting switch 44, the HDR 4 is set so that the HDR 4 will operate solely as a DISC (HDD) subunit.

In this embodiment, it is possible to set three modes in which the HDR 4 operates solely as a DISC (HDD) subunit, solely as a TAPE RECORDINGER/PLAYER subunit, and as both a TAPE RECORDINGER/PLAYER subunit and a DISC (HDD) subunit.

While a TAPE RECORDINGER/PLAYER subunit is allocated to the HDR 4 in this embodiment, a DVD-mode subunit (DISC (DVD)) which is a DISC subunit may be allocated. Further, both a TAPE RECORDINGER/PLAYER subunit and a DISC (DVD) subunit may be allocated. In short, there is not limitation imposed because of the types, the number and the like of allocated subunits.

### (Embodiment 2)

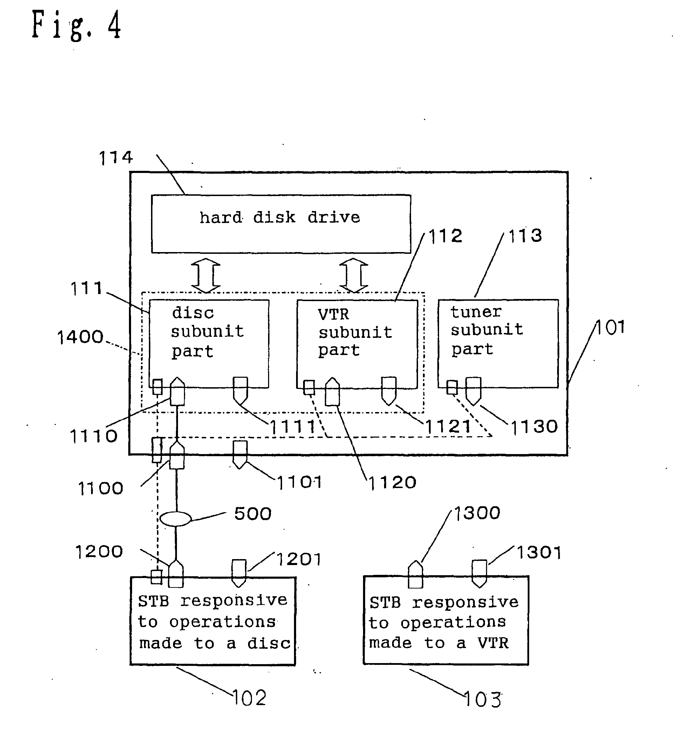

Fig. 4 shows an AV network-compatible recording and reproducing apparatus according to one embodiment, i.e., an embodiment 2 of the present invention. In Fig. 4, denoted at 101 is an AV network-compatible recording and reproducing apparatus which is a central part of the illustrated structure. To be specific, the assumption here is that the example is an HDD recorder which uses a hard disk drive as a recording medium. Denoted at 102 and 103 are apparatuses which play a role as a controller for an HDD recorder 101 which is connected via a 1394 network. To be specific, they are assumed to be STBs (Set Top Box).

The STB 102 is equipped with an application which permits to control a recording and reproducing apparatus such as an HDD recorder which uses a disk medium, while the STB 103 is equipped with an application which permits to control a recording and reproducing apparatus which uses a tape medium of the D-VHS type, etc (In general, the STB 103 is a legacy apparatus.). Further, while the STB 102 and the STB 103 each comprise one input/output terminal in reality, on a network 500, an output terminal 1200 and an input terminal 1201 are logically set to the STB 102 and an output terminal 1300 and an input terminal 1301 are logically set to the STB 103.

Further, while the HDD recorder 101 comprises one input/output terminal in reality, terminals 1100 and 1101 for inputting and outputting the AV data signal are logically set to the HDD recorder 101 via the 1394 network. Denoted at 100 is an input terminal and denoted at 101 is an output terminal. Interface means 1400 is means which writes AV data in or reads out AV data from the HDD recorder 101 via the network 500. Although comprising one input/output terminal in reality, the interface means 1400 is set up as two apparatuses, one being a disc subunit part 111 and the other being a VTR subunit part 112, on the network 500.

The disc subunit part 111 is means which accepts a disc-operation-reflecting record/reproduce command from an AV network. On the network 500, an input terminal 1110 and an output terminal 1111 for inputting and outputting AV data are logically set to the disc subunit part 111. The VTR subunit part 112 is means which accepts a VTR-operation-reflecting record/reproduce command from the AV network. An input terminal 1120 and an output terminal 1121 for inputting and outputting AV data are logically set also to the VTR subunit part 112. Denoted at 13 is a tuner subunit part 1 which expresses an'internal tuner which the HDD recorder 101 comprises. While comprising one input/output terminal in reality, an output terminal 1130 is logically set to the tuner subunit part 113. Denoted at 114 is a hard disk drive which performs actual recording and reproduction of an AV data signal. The hard disk drive 14 and the interface means 1400 can not be recognized on the network 500. What other apparatus can recognize on the network 500 are only the disc subunit part 111, the VTR subunit part 112 and the tuner subunit part 113.

The disc subunit part, the VTR subunit part and the tuner subunit part referred to here correspond respectively to the disc recorder/player subunit, the tape recorder/player subunit and the tuner subunit described in the document [3].

A description will now be given on logical procedures on the network 500 during an operation in which the disc-operation-reflecting STB 102 remotely operates the HDD recorder 101 via the 1394 network and the AV data signal outputted from the STB 102 is recorded in the HDD recorder 101 in such a structure as above, which will also serve as a description on a method for being controlled according to one embodiment of the present invention.

First, an operation that the STB 102 is connected to the HDD recorder 101 via the network will be described. The STB 102 checks the inside of the HDD recorder 101 via the network 500. This permits the network 500 to recognize the disc subunit part 111, the VTR subunit part 112 and the tuner subunit part 113. Paths for commands for the STB 102 to recognize the respective subunits are denoted separately at the wave lines. In the drawing, for clarity of illustration, a virtual terminal is also shown which accepts inputting and outputting of a recognition command.

As a result, the STB 102 recognizes that there is the disc subunit part 111 as a subunit which accepts a disc-operation-reflecting command, and decides that it will be possible to record if the STB 102 sends a disc-operation-reflecting record/reproduce command to the disc subunit part 111.

As preparation for recording, first, the STB 102 establishes an isochronous connection between the output terminal 1200 of the STB 102 and the input terminal 1100 of the HDD recorder, thereby building a transmission path for the AV data signal. The STB 102 further issues an interconnect command to the HDD recorder 101 via the network and accordingly establishes an interconnection between the input terminal 1100 of the HDD recorder 101 and the input terminal 1110 of the disc subunit part. This creates a transmission path for the AV data signal between the STB 102 and the disc subunit part 111. In Fig. 4, this transmission path is denoted at the solid line. A path for sending a command for connection with the input and the output terminals is also denoted at the solid line.

The STB 102 further issues a disc-operation-reflecting record command to the disc subunit part 111 of the HDD recorder 101 via the network 500. The disc subunit part 111, receiving the disc-operation-reflecting record command, drives the hard disk drive 14, whereby the inputted AV data signal is recorded on the hard disk.

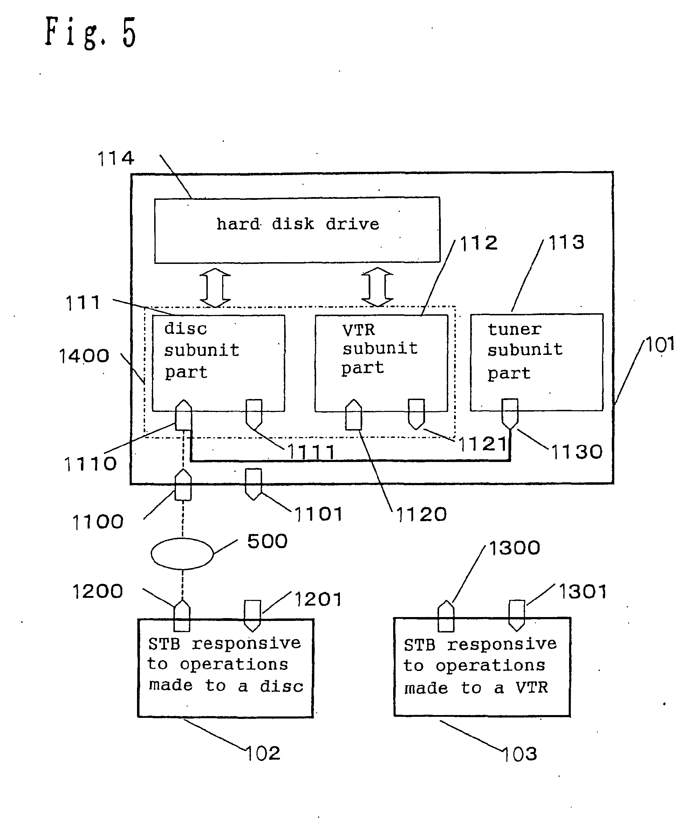

A description will now be given on an operation during which the HDD recorder 101 is remotely operated via the 1394 network 500 and the AV data signal outputted from the tuner subunit part 113 of the HDD recorder 101 is recorded in the HDD recorder 101, with reference to Fig. 5. The structure elements are the same as those shown in Fig. 4, and therefore, will not be described again.

As preparation for recording, the STB 102 issues an interconnect command to the HDD recorder 101 via the network 500 and accordingly establishes an interconnection between the tuner subunit part output terminal 1130 of the tuner subunit part 113 and the disc subunit part input terminal 1110. In this instance, since the interconnection within the HDD recorder 101 alone realizes a necessary transmission path for the AV data signal, it is not necessary to establish an isochronous connection to the external network 500. Denoted at the solid line in Fig. 2 is the transmission path for the AV data signal, while denoted at the dotted line is the transmission path for the interconnect command.

The STB 102 issues a disc-operation-reflecting record command to the disc subunit part 111 of the HDD recorder 101 via the network 500. The disc subunit part 111, receiving the disc-operation-reflecting record command, drives the hard disk drive 14, whereby the AV data signal inputted from the tuner subunit part 113 is recorded on the hard disk.

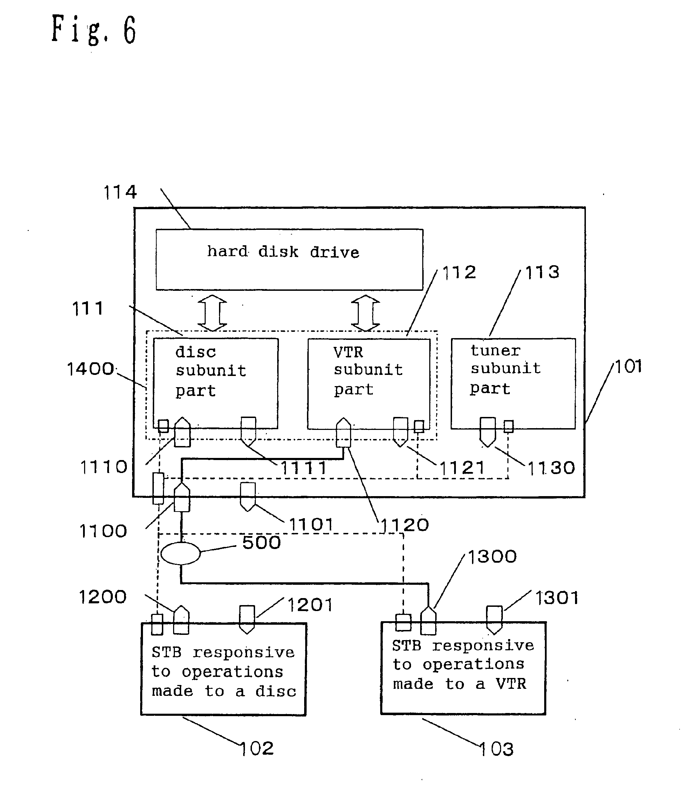

As a next operation, a description will now be given on an operation during which the HDD recorder 101 is remotely operated from the VTR-operation-reflecting STB 103 via the 1394 network and the AV data signal outputted from the STB 103 is recorded in the HDD recorder 101, with reference to Fig. 6. The structure elements are the same as those shown in Fig. 1, and therefore, will not be described again.

The STB 103 checks the inside of the HDD recorder 101 via the network 500. This permits the network 500 to recognize the disc subunit part 111, the VTR subunit part 112 and the tuner subunit part 113. Paths for commands for the STB 103 to recognize the respective subunits are denoted separately at the wave lines as in Fig. 4. In the drawing, for clarity of illustration, a virtual terminal is also shown which accepts inputting and outputting of a recognition command.

The STB 103 recognizes that there is the VTR subunit part 112 as a subunit which accepts a VTR-operation-reflecting command, and decides that it will be possible to record if the STB 103 sends a VTR-operation-reflecting record/reproduce command to the VTR subunit part 112.

As preparation for recording, first, the STB 103 establishes an isochronous connection between the output terminal 1300 of the STB 103 and the input terminal 1100 of the HDD recorder 101, thereby creating a transmission path for the AV data signal. The STB 103 further issues an interconnect command to the HDD recorder 101 via the network 500 and accordingly establishes an interconnection between the input terminal 1100 of the HDD recorder 101 and the input terminal 1120 of VTR subunit 12. This builds a transmission path for the AV data signal between the STB 103 and the VTR subunit part 112. In Fig. 6, this transmission path is denoted at the solid line. In this instance, the transmission path for the interconnect command is also the same.

The STB 103 issues a VTR-operation-reflecting record command to the VTR subunit part 112 of the HDD recorder 101 via the network 500. The VTR subunit part 112, receiving the record command, drives the hard disk drive 14, whereby the inputted AV data signal is recorded on the hard disk.

A more detailed description will now be given on an operation amid the operation described above during which the VTR subunit part 112 is recognized by the network 500.

As described earlier in the BACKGROUND ART section, since the hard disk drive 14 can be accessed at random, the interface means 1400 can perform an operation (simultaneous recording/reproduction operation) of reproducing the AV data signal from a recording area which is the same as or different from a recording area which currently holds AV data on the hard disk drive 14 while recording the AV data signal. In order to ensure that such a simultaneous recording/reproducing state is recognized on the network 500, a recording/reproducing state in each one of the input and the output terminals of the disc subunit part 111 is defined as for a recording/reproducing state of the disc subunit part 111. To be more specific, a recording-side recording/reproducing state (STOP or RECORDING) is reflected in the disc subunit part input terminal 1110, while a reproduction-side recording/reproducing state (STOP or REPRODUCTION) is reflected in the disc subunit part output terminal 1111.

In the meantime, the VTR subunit part 112 expresses a recording and reproducing apparatus which uses a tape medium as an apparatus which is recognized on the network 500, only a recording/reproducing state of the subunit as a whole is defined, and a recording/reproducing state in each one of the input and the output terminals of the VTR subunit part 112 is not defined. On the contrary, a recording medium serving as the substance of the HDD recorder 101 is a hard disk, the interface means 1400 is means which realizes recording in and reproduction from the hard disk.

In this embodiment therefore, an operating state of the HDD recorder 101 which is logically recognized by the STB 102 and the STB 103 on the network 500 is expressed as follows. That is, when the disc subunit part 111 is controlled and the HDD recorder 101 is accordingly operating as viewed from the disc-operation-reflecting STB 102, the operation of the HDD recorder is expressed by recording/reproducing states of the respective input-side and output-side terminals of the disc subunit part 111, while in the event that the VTR subunit part 112 is controlled and the HDD recorder 101 is accordingly operating, the operation of the HDD recorder is expressed by consequent recording/reproducing states of the respective input-side and output-side terminals of the disc subunit part 111.

When the HDD recorder 101 is operated by controlling the VTR subunit part 112 as viewed from the disc-operation-reflecting STB 103, the operation of the HDD recorder is expressed by an operation of the VTR subunit part 112 which is defined based on a combination of consequent recording/reproducing states of the respective input-side and output-side terminals of the disc subunit part 111, while in the event that the disc subunit part 112 is and the HDD recorder 101 is accordingly operating, the operation of the HDD recorder is expressed by an operation of the VTR subunit part 112 which is defined based on a combination of recording/reproducing states of the respective input-side and output-side terminals of the disc subunit part 111.

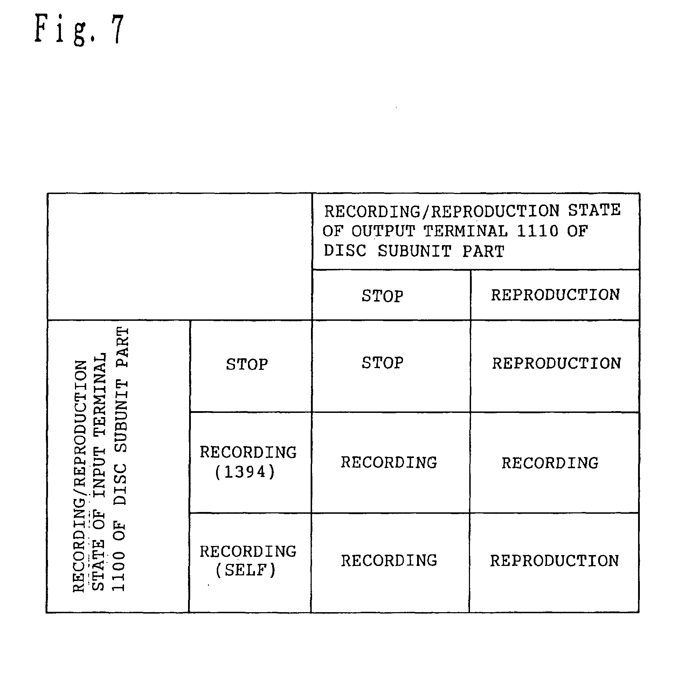

Fig. 7 is a relationships table which shows recording/reproducing states of the input/output terminals of the disc subunit part 111 and a recording/reproducing state of the VTR subunit part 112. In the table, "RECORDING (1394)" represents a state that the AV data signal from the 1394 network 500 is being recorded, that is, a condition that the apparatus input terminal 1100 and the disc subunit part input terminal 1110 are connected by means of an interconnection with the HDD recorder 101 or the apparatus input terminal 1100 and the VTR subunit part input terminal 1120 are connected. Meanwhile, "RECORDING (SELF) " represents a condition that the AV data signal other than from an input through the 1394 network 500 (e.g., from the tuner subunit part 113) is being recorded.

The relationships table will now be described. When a recording/reproducing state of either one of the input terminal and the output terminal of the disc subunit part 111 is STOP, a recording/reproducing state of the other one is adopted as a recording/reproducing state of the VTR subunit part 112. For example, when a recording/reproducing state of the input terminal 1100 of the disc subunit part is STOP and a recording/reproducing state of the output terminal 1111 of the disc subunit part is REPRODUCTION, a recording/reproducing state of the VTR subunit part 112 is determined as REPRODUCTION.

In the meantime, when a recording/reproducing state of the input terminal 1110 of the disc subunit part is RECORDING and a recording/reproducing state of the output terminal 1111 of the disc subunit part is REPRODUCTION (during simultaneous recording/reproduction), a recording/reproducing state of the VTR subunit part 112 is determined as RECORDING in the case of "RECORDING (1394)" but as REPRODUCTION in the case of "RECORDING (SELF)." This is to allow the 1394 network 500 to recognize a recording/reproducing state of the VTR subunit part 112, and is determined based on a judgment that it is desirable to favor a recording/reproducing state (which is recording) of the recording side (the input terminal 1110 of the disc subunit part) during recording of the AV data signal from the 1394 network 500 but otherwise favor a recording/reproducing state (which is reproduction) of the reproduction side (the output terminal 1111 of the disc subunit part).

Recording/reproducing states of the input terminal 1110 and the output terminal 1111 of the disc subunit part change in accordance with a record/reproduce command from a control apparatus which is connected to the network 500, e.g., the STB 102. Responding to the change, a recording/reproducing state of the VTR subunit part 112, too, which is shown to a control apparatus such as the STB 103 changes based on the relationships table which is shown in Fig. 4.

A description will now be given on how recording/reproducing states of the input terminal 1110 and the output terminal 1111 of the disc subunit'part 111 change in response to a record/reproduce command received by the interface means 1400 from the network 500.

When the command is a disc-operation-reflecting command, the interface means 1400 operates as the disc subunit part 111 on the network 500, the operations of the interface means 1400 are directly reflected in states of the input terminal and the output terminal of the disc subunit part 111. That is, when a disc-operation-reflecting reproduce command is received, a recording/reproducing state of the output terminal 1111 of the disc subunit part becomes REPRODUCTION. When a disc-operation-reflecting record command is received, a recording/reproducing state of the input terminal 1100 of the disc subunit part becomes RECORDING. When a disc-operation-reflecting stop command is received, a recording/reproducing state of either one of the input terminal 1110 and the output terminal 1111 which is designated by the stop command becomes STOP. Each one of these states is conveyed to the STB 103 as an operation of the VTR subunit part 112 based on the relationships table which is shown in Fig. 4.

When a VTR-operation-reflecting command is received, the interface means 1400 operates as the VTR subunit part 112 on the network 500, and the command reaches the VTR subunit part 112.

When the command is a record command or reproduce command, a state of an operation executed in response to the command is reflected in a recording/reproducing state of the input terminal 1110 of the disc subunit part 111 or the output terminal 1200 to which the command corresponds. For instance, when a VTR-operation-reflecting reproduce command is received, a recording/reproducing state of the output terminal 1111 of the disc subunit part 111 becomes REPRODUCTION, and this reproducing state of the output terminal 1111 is conveyed to the STB 102 as an operation of the disc subunit part 111. Such a change in operating state above is transmitted between the respective subunits as information traveling through the path which is denoted at the dotted lines in Figs. 5 and 6.

The final recording/reproducing state of the VTR subunit part 112 however is determined based on the relationships table which is shown in Fig. 4. In the relationships table which is shown in Fig. 4 for instance, when a recording/reproducing state of the input terminal 1110 is RECORDING (1394) and a recording/reproducing state of the output terminal 1111 is STOP, upon receipt of a VTR-operation-reflecting reproduce command from outside, the recording/reproducing state of the output terminal 1111 becomes REPRODUCTION and the interface means 1400 performs reproduction as an actual operation, while on the network 500, a recording/reproducing state of the VTR subunit part 112 is recognized as RECORDING. On the other hand, the recording/reproducing states of the input terminal 1110 and the output terminal 1111 are shown as they are to the STB 102.

As described above, transmission of a reproduce command from the STB 103 on the network 500 does not always lead to a situation that a recording/reproducing state of the VTR subunit part 112 as viewed from the STB 103 becomes REPRODUCTION. That is, in this embodiment, there is a case that although an actual operation of the interface means is guaranteed as required by an operation command from the network, an operating state of a subunit recognized on the network is not reflected strictly.

An operation responding to a VTR-operation-reflecting stop command is as follows. That is, when a recording/reproducing state of the VTR subunit part 112 is REPRODUCTION, a recording/reproducing state of the output terminal 1111 of the disc subunit part 111 becomes STOP, while when a recording/reproducing state of the VTR subunit part 112 is RECORD, the input terminal 1110 of the disc subunit part 111 becomes STOP. At this stage, as in the case of transmission of a reproduce command from the network 500, since a recording/reproducing state of the VTR subunit part 112 is determined based on the relationships table which is shown in Fig. 4, transmission of a stop command from the STB 103 on the network 500 may lead to a situation that although an actual operation of the interface means 1400 is STOP, a recording/reproducing state of the VTR subunit part 112 is not recognized necessarily as STOP.

The inventions made by the inventor of the present invention include the following:

### (Invention 1)

A control apparatus which controls a controlled apparatus via a network, said controlled apparatus comprising:
an apparatus main part which performs a predetermined operation; a main subunit which activates said apparatus main part in response to an instruction which is from said control apparatus and directed to said controlled apparatus; an auxiliary subunit which disguises as if it were an apparatus other than said controlled apparatus and which directly or indirectly activates said apparatus main part in response to an instruction which is from said control apparatus and directed to an apparatus other than said controlled apparatus; and notifying means which provides said control apparatus with a notification which tells that both said main subunit and said auxiliary subunit are capable of activating said apparatus main part, and
wherein said control apparatus comprises receiving means which receives said notification, and
said control apparatus is capable of controlling said main subunit or said subunit based on said notification thus received.

### (Invention 2)

A control system, comprising:
one or a plurality of control apparatuses which control via a network; and
a controlled apparatus which comprises: an apparatus main part which is controlled by said control apparatuses and which performs a predetermined operation; a main subunit which activates said apparatus main part in response to an instruction which is from said one or plurality of control apparatuses and directed to said controlled apparatus; and an auxiliary subunit which disguises as if it were an apparatus other than said controlled apparatus and which directly or indirectly activates said apparatus main part in response to an instruction which is from said one or plurality of control apparatuses and directed to an apparatus other than said controlled apparatus.

In each one of the embodiments described above, the network formed by the IEEE 1394 bus 5 and the 1394 network 500 correspond to a network according to the present invention, the first DTV 1, the second DTV 2, the STB 102 and the STB 103 correspond to a control apparatus according to the present invention, and the HDR 4 and the HDD recorder 101 correspond to a controlled apparatus according to the present invention. The subunit 40 and the disc subunit part 111 correspond to a main subunit according to the present invention, while the subunit 42 and the VTR subunit part 112 correspond to an auxiliary subunit according to the present invention. Further, the hard disk drive 114 and the HDR main part 45 correspond to an apparatus main part according to the present invention.

The input terminal 1110 corresponds to an input plug according to the present invention, a recording/reproducing state of the input terminal 1110 corresponds to an inputting state according to the present invention, the output terminal 1111 corresponds to an output plug according to the present invention, and a recording/reproducing state of the output terminal 1111 corresponds to an outputting state according to the present invention.

In the embodiment 2, a disc-operation-reflecting command corresponds to an instruction directed to a controlled apparatus according to the present invention, and a VTR-operation-reflecting command corresponds to an instruction directed to an apparatus other than a controlled apparatus according to the present invention. A combination of the control system according to the embodiment 1 and the AV network-compatible recording and reproducing apparatus and the STBs according to the embodiment 2 correspond to a control system according to the present invention.

However, the present invention is not limited to the embodiments described above. While the foregoing has described the present invention in relation to an HDD recorder for instance, it is possible to implement the present invention if the functions according to the present invention are incorporated in a recording and reproducing apparatus which is capable of executing recording and reproduction at the same time and which uses a random-access recording medium such as other disc-shaped medium (e.g., a DVD), a semiconductor memory, etc.

In addition, although the foregoing has described that an instruction directed to the controlled apparatus according to the present invention is a disc-operation-reflecting command and an instruction directed to an apparatus other than the controlled apparatus according to the present invention is a VTR-operation-reflecting command, the instruction directed to the controlled apparatus according to the present invention may be a command corresponding to an operation made to other recording and reproducing apparatus which is capable of executing recording and reproduction at the same time and which comprises a random-access recording medium, as long as the instruction contains information which designates an inputting state of the input plug and an outputting state of the output plug. When the instruction directed to the controlled apparatus according to the present invention designates only an operating state of the auxiliary subunit, the instruction may be a command corresponding to an operation made to other recording and reproducing apparatus which comprises other recording medium.

Further, although the foregoing has described the embodiment 1 as a structure which comprises subunit allocating means and the embodiment 2 as a structure which omits subunit allocating means, the present invention may be realized as a structure which is the same as the embodiment 2 as it comprises any one of subunit allocating means, notifying means and setting means, or as a structure which is the same as the embodiment 1 as it is without subunit allocating means, notifying means and setting means.

Further, the present invention may be a program for making a computer function as a main subunit and an auxiliary subunit of a controlled apparatus which is controlled by one or a plurality of control apparatuses via a network according to a first invention, said main subunit activating said apparatus main part in response to an instruction which is from said one or plurality of control apparatuses and directed to said controlled apparatus, said auxiliary subunit disguising as if it were an apparatus other than said controlled apparatus and directly or indirectly activating said apparatus main part in response to an instruction which is from said one or plurality of control apparatuses and directed to an apparatus other than said controlled apparatus, or the present invention may be a medium which can be processed on a computer and stores such a program as described above.

Further, the program according to the present invention may be a program which operates in co-operation with a computer and makes the computer execute the functions of all or some means (or apparatuses, elements, circuits, parts, etc.) of the controlled apparatus according to the present invention described above.

Moreover, the present invention may be a medium which can be read on a computer, stores a program, makes a computer execute all or some functions of all or some means of the controlled apparatus according to the present invention described above, and allows the program to operate in co-operation with the computer and execute these functions.

"Some means (or apparatuses, elements, circuits, parts, etc.) " according to the present invention and "some steps (or processes, operations, functions, etc.)" according to the present invention described above refer to some means or steps among these plurality of means or steps, or some functions or some operations in one means or at one step.

Further, some apparatuses (or elements, circuits, parts, etc.) according to the present invention refer to some apparatuses among the plurality of apparatuses, or some means (or elements, circuits, parts, etc.) within one apparatus, or some functions of one means.

The present invention also. covers a recording medium which stores the program according to the present invention and which can be read on a computer.

In one example of use, the program according to the present invention may be recorded in a recording medium which can be read on a computer so that the program operates in co-operation with the computer.

In one example of use, the program according to the present invention may be transmitted through a transmission medium and read by a computer so that the program operates in co-operation with the computer.

A data structure according to the present invention includes a database, a data format, a data table, a data list, a data type, etc.

The recording medium includes a ROM, etc., whereas the transmission medium includes a transmission medium such as the Internet, light, an electric wave, a sound wave, etc.

As described above, the computer referred to in the present invention is not limited pure hardware such as a CPU but may include firmware, OS, and further, peripheral equipment.

As described above, the structure according to the present invention may be realized by software or hardware.

### POSSIBILITY OF INDUSTRIAL USE

As described above, according to the present invention, even when an application of a control apparatus is not compatible with a subunit of a controlled apparatus, control of the subunit is possible. In addition, since it is possible to control even an originally intended subunit, it is possible to control from a control apparatus which is equipped with an application which is compatible with the originally intended subunit. Hence, it is possible to increase the number of control apparatuses which can control a controlled apparatus.

## Claims

1. A controlled apparatus which is controlled by one or a plurality of control apparatuses via a network, comprising:
an apparatus main part which performs a predetermined operation;
a main subunit which activates said apparatus main part in response to an instruction which is from said one or plurality of control apparatuses and directed to said controlled apparatus; and
an auxiliary subunit which disguises as if it were an apparatus other than said controlled apparatus and which directly or indirectly activates said apparatus main part in response to an instruction which is from said one or plurality of control apparatuses and directed to an apparatus other than said controlled apparatus.

2. The controlled apparatus of claim 1, comprising subunit allocating means which allocates the type and/or the number of said auxiliary subunit.

3. The controlled apparatus of claim 1, comprising notifying means which notifies said control apparatus that both said main subunit and said auxiliary subunit are capable of activating said apparatus main part.

4. The controlled apparatus of claim 1, comprising setting means which sets regarding (1) whether said controlled apparatus can be activated by said main subunit, (2) whether said controlled apparatus can be activated by said auxiliary subunit and (3) whether said controlled apparatus can be activated as said main subunit and said auxiliary subunit.

5. The controlled apparatus of claim 1, wherein said apparatus main part has a recording/reproduction function which is for recording and/or reproducing data,
said main subunit is logically set at least one input plug which can detect an inputting state of said data to said apparatus main part and/or at least one output plug which can detect an outputting state of said data from said apparatus main part, and
said instruction to said main subunit contains information which designates each one of said inputting state of said input plug and said outputting state of said output plug.

6. The controlled apparatus of claim 5, wherein said input plug and said output plug are set one each to said main subunit,
an operating state of said controlled apparatus responding to a control apparatus which issues an instruction to said main subunit during an operation of said auxiliary subunit is expressed as a combination of said inputting state of said input plug and said outputting state of said output plug of said main subunit, and
an operating state of said controlled apparatus responding to a control apparatus which issues an instruction to said auxiliary subunit during an operation of said main subunit is expressed as an operating state of said auxiliary subunit which is determined based on a combination of said inputting state of said input plug and said outputting state of said output plug of said main subunit.

7. The controlled apparatus of claim 6, wherein when either one of said inputting state of said input plug and said outputting state of said output plug is indicative of stopped inputting of data in or stopped outputting.of data from said main subunit, an operating state of said controlled apparatus responding to a control apparatus which issues an instruction to said auxiliary subunit during an operation of said main subunit is expressed as the other one of said inputting state of said input plug and said outputting state of said output plug.

8. The controlled apparatus of claim 7, wherein when a stop instruction to stop reproduction of said data is received by said auxiliary subunit as said instruction during data reproduction performed by said apparatus main part, said outputting state of said output plug of said main subunit becomes a stopped state, and
when a stop instruction to stop recording of said data is received by said auxiliary subunit as said instruction during data recording performed by said apparatus main part, said inputting state of said input plug of said main subunit becomes a stopped state.

9. The controlled apparatus of claim 7, wherein when either one of said inputting state of said input plug and said outputting state of said output plug of said main subunit is indicative of recording or reproduction of said data, an operating state of said controlled apparatus responding to a control apparatus which issues an instruction to said auxiliary subunit during an operation of said main subunit is expressed by the other one of said inputting state of said input plug and said outputting state of said output plug,
when said inputting state of said input plug is indicative of recording of said data and said outputting state of said output plug is indicative of reproduction of said data and when said input plug is recognized as being connected to said network, said operating state is determined as recording, but
when said input plug is recognized as not being connected to said network, said operating state is determined as reproduction.

10. The controlled apparatus of any one of claims 1 through 9, wherein said network is in compliance with the IEEE 1394 standard.

11. The controlled apparatus of any one of claims 1 through 9, wherein said control apparatus recognizes said main subunit as an apparatus related to recording in and/or reproduction from a random-access recording medium but said auxiliary subunit as an apparatus related to recording in or reproduction from a tape medium.

12. A method-for-being-controlled for being controlled by one or a plurality of control apparatuses via a network, comprising:
a first step of accepting an instruction which is from said one or plurality of control apparatuses and directed to said controlled apparatus and activating an apparatus main part which performs a predetermined operation; and
a second step of disguising as an apparatus other than said controlled apparatus and directly or indirectly activating said apparatus main part in response to an instruction which is from said one or plurality of control apparatuses and which is directed to an apparatus other than said controlled apparatus.

13. The method-for-being-controlled of claim 12, wherein said apparatus main part has a recording/reproduction function which is for recording and/or reproducing data,
said first step comprises a step of logically setting at least one input plug which can detect an inputting state of said data to said apparatus main part and/or at least one output plug which can detect an outputting state of said data from said apparatus main part, and
said instruction at said first step contains information which designates each one of said inputting state of said input plug and said outputting state of said output plug.

14. The method-for-being-controlled of claim 12, wherein said first step comprises a step of setting said input plug and said output plug one each,
a state of implementation of said method-for-being-controlled on a control apparatus which issues an instruction 'which is for said first step is expressed as a combination of said inputting state of said input plug and said outputting state of said output plug at said first step, and
a state of implementation of said method-for-being-controlled on a control apparatus which issues an instruction which is for said second step during execution of said first step is expressed as an execution state of said second step which is determined based on a combination of said inputting state of said input plug and said outputting state of said output plug at said first step.
